(19) Europäisches Patentamt
European Patent Office
Office européen des brevets

(11) Publication number: 0 073 450
B1

(12) # EUROPEAN PATENT SPECIFICATION

(45) Date of publication of patent specification: 26.10.88

(51) Int. Cl.$^4$: C 08 L 33/12

(21) Application number: 82107722.9

(22) Date of filing: 23.08.82

(54) **Process for producing a light-diffusible methacrylic resin, and formed articles having a delustered surface.**

(30) Priority: 31.08.81 JP 136320/81
21.11.81 JP 186115/81

(43) Date of publication of application:
09.03.83 Bulletin 83/10

(45) Publication of the grant of the patent:
26.10.88 Bulletin 88/43

(84) Designated Contracting States:
DE FR GB IT

(56) References cited:
US-A-3 726 586
US-A-4 108 923

CHEMICAL ABSTRACTS, vol. 78, no. 14, 9th April 1973, page 45, no. 85396s, Columbus, Ohio, USA

(73) Proprietor: MITSUBISHI RAYON CO. LTD.
3-19, Kyobashi 2-chome Chuo-Ku
Tokyo 104 (JP)

(72) Inventor: Kamada, Kazumasa
136-120, Fukumen Ohno-cho
Saiki-gun Hiroshima-ken, 739-04 (JP)
Inventor: Tamai, Katsumi
3-2-204, Kurokawa 3-chome
Ohtake-shi Hiroshima-ken, 739-06 (JP)
Inventor: Abe, Kazunori
2-1, Kurokawa 3-chome Ohtake-shi
Hiroshima-ken, 739-06 (JP)

(74) Representative: Patentanwälte TER MEER - MÜLLER - STEINMEISTER
Mauerkircherstrasse 45
D-8000 München 80 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 073 450 B1

**Description**

Background of the invention

Field of the invention

The present invention relates to a process for producing light-diffusible resins, and formed articles having a delustered surface, which are obtained from these resins.

More particularly, the present invention relates to a process for producing a novel light-diffusible methacrylic resin composed of two phases: a continuous phase formed of polymethyl methacrylate or a polymer obtained from a polymerizable unsaturated monomer mixture containing at least 80% by weight of methyl methacrylate, and a dispersed phase formed of a polymer of a specific acrylic or methacrylic acid ester or a polymer obtained from a polymerizable unsaturated monomer mixture containing at least 50% by weight of this specific acrylic or methacrylic acid ester, in which a specific relation is established between the refractive index of the polymer of the dispersed phase and the refractive index of the polymer of the continuous phase. Formed articles having a delustered surface obtained from these resins are also disclosed.

Description of the prior art

Polymethyl methacrylate or a copolymer consisting of methyl methacrylate and a minor amount of a comonomer, which is ordinarily called "methacrylic resin", is used in various fields because it has an excellent gloss and a good weatherability and it can easily be processed. Furthermore, a methacrylic resin of this type rendered light-diffusible by the addition of a light-diffusing agent is used to fabricate signboards, illumination covers, screens, partitions, transmoms and windows in various fields. However, increase of the light diffusibility is limited in the conventional light-diffusible methacrylic resins. Light diffusion properties are typically obtained by the addition of inorganic pigments such as titanium oxide, barium sulfate and aluminum hydroxide or polystyrene and styrene methyl methacrylate copolymers to the resin, and therefore, application fields of these light-diffusible resin are inevitably restricted. More specifically, in the conventional light-diffusible methacrylic resins, if it is desired to increase the light diffusibility to a certain level, it is impossible to provide a sufficient brightness, that is light transmittance, and therefore, according to the conventional technique, light diffusibility has been provided to methacrylic resins while sacrificing brightness to some extent.

From US—A 4 108 923 an impact resistant poly(methyl methacrylate) composition is known having a high white light transmission efficiency which comprises a continuous phase of a first polymer comprising about 80 to 98% by weight of methyl methacrylate and a dispersed phase which is a cross-linked graft polymer. It is not possible to provide for a homogeneous solution of said cross-linked graft polymer in the polymerizable composition providing the continuous phase. It is therefore not possible to obtain a product having excellent optical characteristics.

The terms "brightness", "light-diffusibility" and other terms referred to in this specification and claims will now be explained.

The terms "brightness" means the intensity of the light transmitted through a resin, and the degree of the intensity is expressed by the total luminous transmittance. The term "light-diffusibility" means the dimness of the background seen through a resin; the degree of the dimness is quantitatively expressed by the maximum bend angle β. The ratio of the luminance measured to the unit incident illuminance is called "gain", and the gain on the incident optical axis is especially called "peak gain". The angle deviated from the optical axis for obtaining a gain of 33% of the peak gain is called "maximum bend angle" and is expressed by β. A larger value β indicates a higher light diffusibility.

When the angle β is 2° to 3°, if the background is seen through a resin, the background is not definitely recognized but is seen as being dim and vague. If the value β is increased, the degree of the dimness of the background is increased, but the total luminous transmittance is ordinarily reduced. The value β required for a resin varies according to the intended end use of the resin. Conventional methacrylic resins rendered light-diffusible by addition of known light diffusing agents are defective in that even in the case where a relatively small value β is required, or in the case where a required light diffusibility is satisfied with a relatively small value β, reduction of the total luminous transmittance is extreme.

With the recent concerns and measures for conserving energy, the development of a methacrylic resin having a light diffusibility of a certain desirable degree while retaining a high total luminous transmittance without sacrifice of the brightness has eagerly been desired.

Summary of the invention

It is a primary object of the present invention to provide a process for producing a novel methacrylic resin having a high total luminous transmittance and a fairly good light diffusibility in combination, in which the defects of the conventional techniques are overcome.

Another object of the present invention is to provide a formed article having a delustered surface, which is obtained from the novel light-diffusible methacrylic resin herein described.

Based upon our studies of ways to satisfy the above objectives we have found that a resin comprising a continuous phase formed of polymethyl methacrylate, or a polymer obtained from a polymerizable unsaturated monomer mixture containing at least 80% by weight of methyl methacrylate, and a dispersed

phase formed of a polymer comprising units of an ester of an acrylic or methacrylic acid with an alcohol having at least 2 carbon atoms as the main constituent units, in which the refractive index of the polymer forming the continuous phase and the refractive index of the polymer forming the dispersed phase are within certain specific ranges, has the unique, desirable combination of a high total luminous transmittance and a fairly good diffusibility. The present invention was made on the basis of this finding.

More specifically, in accordance with the present invention, there is provided a process for producing a light-diffusible methacrylic resin, which comprises 80 to 99.9% by weight of a polymer (A) forming a continuous phase and 20 to 0.1% by weight of a polymer (B) forming a dispersed phase. Polymer (A) is a polymer prepared from methyl methacrylate alone, or a polymerizable unsaturated monomer mixture containing at least 80% by weight of methyl methacrylate; polymer (B) is a polymer prepared from at least one polymerizable unsaturated monomer represented by the following general formula (I):

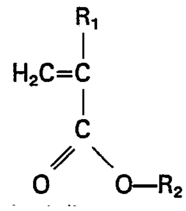

[I]

in which $R_1$ is a hydrogen atom or a methyl group and $R_2$ is a halogen-substituted or unsubstituted alkyl, cycloalkyl or aralkyl radical having 2 to 18 carbon atoms.

Alternatively for polymer (B) a polymerizable unsaturated monomer mixture is used containing at least 50% by weight of at least one polymerizable unsaturated monomer represented by the general formula [I]. The ratio of the refractive index $n_B$ of the polymer (B) to the refractive index $n_A$ of the polymer (A) is in the range of $0.950 \leqq n_B/n_A < 0.998$ or $1.002 < n_B/n_A \leqq 1.050$.

Brief description of the drawings

Figure 1 is a graph illustrating the relationships between bend angles of 0 through 50° and the gains, which are observed in a resin plate obtained in Example 4 (in accordance with the present invention) and a resin plate obtained in Comparative Example 5; and

Figure 2 is a graph illustrating the relationships between the total luminous transmittance and the maximum bend angle β which are observed in the resin plates obtained in Examples 2 through 6 (in accordance with the present invention) and Comparative Examples 3 through 7.

Detailed description of the preferred embodiments

The methacrylic resin of the present invention comprises a continuous phase and a dispersed phase, and between the refractive index $n_A$ of the polymer (A) forming the continuous phase and the refractive index $n_B$ of the polymer (B) forming the dispersed phase, there is established a specific relationship, that is, a ratio of $0.950 \leqq n_B/n_A < 0.998$ or $1.002 < n_B/n_A \leqq 1.050$.

From the theory of the light scattering of the two-phase system, it is known that the distribution (angular distribution) of the intensity of the light scattered by dispersed particles, depending on the angle to the incident optical axis, is determined according to the size and shape of the dispersed particles and the refractive index ratio of the dispersed particles to the dispersing medium. Furthermore, it is known that except when scattering is regarded substantially as Rayleigh scattering, because the size of the dispersed particles is much smaller than the wavelength of the light, as the refractive index ratio of the dispersed particles to the dispersing medium becomes closer to 1, the intensity of the scattered light is higher at a small angle to the incident optical axis and simultaneously, the intensity of the reflection light, that is, the light scattered at an angle of 90 to 270° to the incident optical axis, is reduced.

We have succeeded in obtaining the bright, light-diffusible resin of the present invention by applying the above principle. More specifically, a light-diffusible resin, which has a weak reflection of light and hence, is bright, can be obtained by adjusting the refractive index ratio between polymers constituting the dispersed phase and continuous phase to a value close to 1.

In the methacrylic resin of the present invention, the $n_B/n_A$ value is in the range of $0.950 \leqq n_B/n_A < 0.998$ or $1.002 < n_B/n_A \leqq 1.050$. If the $n_B/n_A$ value is in the range of $n_B/n_A < 0.950$ or $1.050 < n_B/n_A$, the reflection of the resin is relatively strong and the brightness is low, and therefore, the objects of the present invention cannot be attained. When the $n_B/n_A$ value is in the range of $0.998 \leqq n_B/n_A \leqq 1.002$ the light diffusibility of the resin is low and the maximum bend angle β is small, and therefore, the objects of the present invention cannot be attained. In the present invention, the $n_B/n_A$ value is appropriately selected from the above range according to the light diffusibility required for the particular resin. More specifically, when importance is attached to the brightness, the $n_B/n_A$ value approaches 1, and when stress is placed on the light diffusibility, the $n_B/n_A$ value departs from 1.

In the resin of the present invention, the degree of uniformity of dispersion of the dispersed phase in the continuous phase may be determined according to the intended use of the resin. Ordinarily it is preferred that the dispersion state be optically uniform to an extent such that local non-uniformity of the

total luminous transmittance or light diffusibility is not found when the transmitted light is observed with the naked eye.

The particle size of individual dispersed particles seen microscopically is not particularly critical, but a preferred range does exist. In the resin of the present invention, the shape of the dispersed particles is not particularly critical. Accordingly, the size of the dispersed particles is expressed by the radius *a* of equivalent spheres having the same refractive index and equal light scattering cross-section. In the case where the radius *a* of the dispersed particles is sufficiently smaller than the wavelength of the light and scattering regarded substantially as Rayleigh scattering is caused, the reflection light from the resin is strong and the total luminous transmittance is reduced, and therefore, good results cannot be obtained. On the other hand, if the radius *a* of the dispersed particles is too large, the light diffusibility of the resin is low and the maximum bend angle is reduced, and also good results cannot be obtained. It is preferred that the size of the dispersed particles be in the range of 0.1 to 500 μm in size, preferably 0.5 to 100 μm in size, calculated as the radius of equivalent spheres having the same refractive index and equal light scattering cross-section.

Compositions of the novel resins

The resin of the present invention comprises 80 to 99.9% by weight of the continuous phase and 20 to 0.1% by weight of the dispersed phase. If the amount of the dispersed phase is less than 0.1% by weight, the light diffusibility of the resin is insufficient. On the other hand, if the amount of the dispersed phase exceeds 20% by weight, the light diffusibility of the resin is sufficient, but the total luminous transmittance is reduced. Further a reduction of the weatherability, solvent resistance, strength and heat resistance properties occurs and again good results are not ordinarily obtained. It is especially preferred that the amount of the continuous phase be from 90 to 99.5% by weight and the amount of the dispersed phase be from 10 to 0.5% by weight.

The continuous phase of the light-diffusible methacrylic resin of the present invention is formed from polymer [A], that is, poly(methyl methacrylate) or a polymer obtained from a polymerizable unsaturated monomer mixture containing at least 80% by weight of methyl methacrylate. Polymerizable unsaturated monomers copolymerizable with methyl methacrylate incorporated in the polymerizable unsaturated monomer mixture are, for example, esters of acrylic and methacrylic acids with monohydric saturated and unsaturated alcohols, such as methyl acrylate, ethyl acrylate, ethyl methacrylate, propyl acrylate, propyl methacrylate, butyl acrylate, butyl methacrylate, 2 - ethylhexyl acrylate, 2 - ethylhexyl methacrylate, cyclohexyl acrylate, cyclohexyl methacrylate, benzyl acrylate and benzyl methacrylate, esters of acrylic and methacrylic acids with polyhydric alcohols, such as ethylene glycol diacrylate, ethylene glycol dimethacrylate, 1,3 - butylene glycol diacrylate, 1,3 - butylene glycol dimethacrylate, trimethylol ethane triacrylate trimethylol ethane trimethacrylate, trimethylol propane triacrylate, trimethylol propane trimethacrylate, pentaerythritol tetraacrylate, pentaerythritol tetramethacrylate, 2 - hydroxyethyl acrylate, 2 - hydroxyethyl methacrylate, 2 - hydroxypropyl acrylate and 2 - hydroxypropyl methacrylate, and acrylic acid, methacrylic acid, styrene and styrene derivatives.

The polymerizable unsaturated monomer copolymerizable with methyl methacrylate is incorporated into the polymer [A] in an amount of up to 20% by weight but preferably no more than 10% by weight. If the amount of methyl methacrylate in the polymer [A] is less than 80% by weight, reduction of the strength, weatherability and heat resistance of the resin readily occurs, and the cost of the starting materials is increased.

Esters of acrylic and methacrylic acids with monohydric saturated alcohols are preferred as the polymerizable unsaturated monomer copolymerizable with methyl methacrylate, and methyl acrylate, ethyl acrylate, ethyl methacrylate, butyl acrylate, butyl methacrylate, 2 - ethylhexyl acrylate and 2 - ethylhexyl methacrylate are especially preferred among these esters.

In a preferred embodiment of the present invention, the amount of the polymerizable unsaturated monomer copolymerizable with methyl methacrylate in the polymer [A] is adjusted to up to 10% by weight.

More specifically, as preferred examples of the polymer [A], there can be mentioned poly(methyl methacrylate) and a polymer obtained from a mixture comprising at least 90% by weight of methyl methacrylate and up to 10% by weight of a polymerizable unsaturated monomer selected from methyl acrylate, ethyl acrylate, ethyl methacrylate, butyl acrylate, butyl methacrylate, 2 - ethylhexyl acrylate and 2 - ethylhexyl methacrylate.

The polymer [B] forming the dispersed phase of the light-diffusible methacrylic resin must satisfy a specific relationship, defined in the present invention, of the refractive index with the polymer [A] forming the continuous phase. This polymer [B] is a polymer consisting solely of at least one polymerizable unsaturated monomer represented by the above general formula [I] or a polymer obtained from a polymerizable unsaturated monomer mixture containing at least 50% by weight of at least one polymerizable unsaturated monomer represented by the above general formula [I]. As typical instances of the polymerizable unsaturated monomer represented by the general formula [I], the following compounds can be mentioned. The refractive index of each of these polymers is indicated parenthetically.

| | |
|---|---|
| 2,2,2-Trifluoroisopropyl methacrylate | (1.4185) |
| 2,2,2-trifluoroethyl methacrylate | (1.437) |
| isopropyl acrylate | (1.456) |
| 2-ethylhexyl acrylate | (1.478) |
| n-butyl acrylate | (1.466) |
| t-butyl methacrylate | (1.467) |
| ethyl acrylate | (1.4685) |
| isopropyl methacrylate | (1.473) |
| monofluoroethyl methacrylate | (1.478) |
| n-hexyl methacrylate | (1.481) |
| n-butyl methacrylate | (1.483) |
| n-propyl methacrylate | (1.484) |
| ethyl methacrylate | (1.485) |
| 2-methylcyclohexyl methacrylate | (1.503) |
| cyclohexyl methacrylate | (1.504) |
| 2-chlorocyclohexyl methacrylate | (1.518) |
| 2-cyclohexylcyclohexyl methacrylate | (1.519) |
| 2-bromoethyl methacrylate | (1.543) |
| benzyl methacrylate | (1.568) |

It will be understood that these polymerizable unsaturated monomers represented by the above general formula [I] may be used singly or in the form of a mixture of two or more of them.

In order to attain the objects of the present invention, it is absolutely required that the refractive index ratio of the polymer [B] forming the dispersed phase to the polymer [A] forming the continuous phase be within a specific range and that polymer [B] should be dispersed in the continuous phase in a good and homogeneous state. In the production of the light-diffusible methacrylic resin of the present invention, in view of the handling easiness, it is preferred that the polymer [B] be in the vitreous (glass-like) state at room temperature. Thus, in a preferred embodiment of the present invention, according to the desired refractive index and the intended light diffusibility of the end product, one or more of basic compounds are selected from t-butyl methacrylate, ethyl methacrylate, cyclohexyl methacrylate and benzyl methacrylate as monomers providing a polymer having a relatively high glass transition temperature. These are polymerized or copolymerized with other compounds represented by the general formula [I] or other polymerizable unsaturated monomers, and the resulting polymer which is in the vitreous state at room temperature and has a desired refractive index is used as the polymer [B] forming the dispersed phase.

Especially preferred examples of the polymerizable unsaturated monomer represented by the general formula [I] include t-butyl methacrylate (the refractive index ratio of the polymer to poly(methyl methacrylate) is 0.983; each parenthesized value given below shows this refractive index ratio), ethyl methacrylate (0.995), cyclohexyl methacrylate (1.010) and benzyl methacrylate (1.051).

A polymer obtained by copolymerizing the polymerizable unsaturated monomer represented by the general formula [I] with other polymerizable unsaturated monomer may be used as the polymer [B] forming the dispersed phase of the resin of the present invention. As the copolymerizable unsaturated monomer, there can be mentioned styrene and styrene derivatives such as α-methyl styrene, methyl acrylate and methyl methacrylate, and esters of acrylic and methacrylic acids with polyhydric alcohols, such as ethylene glycol diacrylate, ethylene glycol dimethacrylate, 1,3 - butylene glycol diacrylate, 1,3 - butylene glycol dimethacrylate, trimethylol ethane triacrylate, trimethylol ethane trimethacrylate, trimethylol propane triacrylate, trimethylol propane trimethacrylate, pentaerythritol tetraacrylate and pentaerythritol tetramethacrylate.

Among these compounds, styrene and methyl methacrylate are especially preferred.

The polymerizable unsaturated monomer copolymerizable with the compound represented by the general formula [I] is incorporated in an amount of up to 50% by weight in the polymerizable unsaturated monomer mixture. If the amount of the compound represented by the general formula [I] in the polymerizable unsaturated monomer mixture is less than 50% by weight, even if the refractive index ratio of the polymer [B] to the polymer [A] is within the range specified in the present invention, a good dispersion state of the polymer [B] in the polymer [A] can hardly be obtained. In the present invention, it is especially preferred that the amount of the compound represented by the general formula [I] in the polymerizable unsaturated monomer mixture be at least 80% by weight.

The continuous phase and dispersed phase of the resin of the present invention are formed of the above-mentioned polymers [A] and [B], respectively. However, according to polymerization conditions, a resin may be obtained in which a very small amount of the polymer [B] is present in the continuous phase, a resin in which a very small amount of the polymer [A] is present in the dispersed phase and a resin in which the polymer [A] is present in the dispersed state in the dispersed phase. These light-diffusible resins are included within the scope of the present invention.

The light-diffusible methacrylic resin of the present invention consists essentially of the above-mentioned two phases, that is, the continuous phase and dispersed phase, but it may further comprise various conventional, art-recognized additives customarily added to methacrylic resins. Suitable additives

may include, for example, coloring dyes, antioxidants, ultraviolet absorbers, other stabilizers, flame retardants and mold releasers for facilitating release of resins from casting molds. A resin in which a third phase incompatible in the continuous phase and dispersed phase is formed and an additional light diffusibility property is achieved is obtained by adding an ordinary pigment such as titanium oxide, barium sulfate, calcium carbonate or aluminum hydroxide or a known light-diffusing agent such as polystyrene or a styrene-methyl methacrylate copolymer. These two are included within the scope of the present invention.

The ultimate shape of the resin of the present invention is not particularly critical, but as a typical example, a sheet or plate-like shape can be mentioned. The thickness of the resin plate is not particularly critical, but the thickness of the resin plate is ordinarily 0.2 to 20 mm and preferably 1 to 10 mm.

Procedures for polymerizing the resin components

The process for the preparation of the light-diffusible resin of the present invention will now be described.

The process for the preparation of the resin of the present invention is not particularly critical, however preferably the polymer [B] forming the dispersed phase is first prepared, the polymer [B] is homogeneously dissolved in a polymerizable unsaturated monomer or a polymerizable unsaturated monomer mixture for formation of the polymer [A] forming the continuous phase or a partially polymerized product thereof, and the resulting polymerizable composition is subjected to polymerization to form a resin of the present invention comprising the continuous phase and dispersed phase.

More specifically, in accordance with the present invention, the novel resins are prepared by homogeneously dissolving 20 to 0.1% by weight of a polymer of a polymerizable unsaturated monomer represented by the general formula [I], or a polymer obtained from a polymerizable unsaturated monomer mixture containing at least 50% by weight of a polymerizable unsaturated monomer represented by the general formula [I], i.e., polymer [B], into 80 to 99.9% by weight of methyl methacrylate or a polymerizable unsaturated monomer mixture containing at least 80% by weight of methyl methacrylate, to be formed into a polymer [A] which forms the continuous phase, or a partially polymerized product thereof. The polymerization reaction is conducted in the presence of a radical polymerization initiator and ordinarily in a casting mold to obtain a light-diffusible methacrylic resin comprising a continuous phase formed of the polymer [A] and a dispersed phase formed of the polymer [B].

The process for the preparation of the polymer [B] used in the above process for formation of the dispersed phase is not particularly critical, and various conventional polymerization techniques may be adopted such as emulsion polymerization, solution polymerization and bulk polymerization methods as are customarily carried out on an industrial scale. Ordinarily, however, suspension polymerization in an aqueous medium is preferred. This suspension polymerization method is advantageous in that the obtained polymer can be handled very easily and dissolution or dispersion of the polymer [B] in a polymerizable composition for formation of the polymer [A] can be performed relatively easily.

As the polymerizable composition for formation of the polymer [A] forming the continuous phase of the resin of the present invention, one can use methyl methacrylate, partially polymerized methyl methacrylate, a polymerizable unsaturated monomer mixture containing at least 80% by weight of methyl methacrylate or a partially polymerized product thereof. It is ordinarily preferred that a partially polymerized product be used for efficiency of production. A partially polymerized product of the polymerizable composition may be obtained by dissolving a polymer prepared in advance into the polymerizable unsaturated monomer, but it is ordinarily preferable to adopt a method in which a radical polymerization initiator is added to the polymerizable unsaturated monomer and the obtained composition is heated at a boiling point of that composition to obtain a partially polymerized product.

The polymer [B] forming the dispersed phase is homogeneously dissolved in the polymerizable composition for formation of the polymer [A] forming the continuous phase. In order to obtain an optically uniform resin, that is a resin uniform in the degree of the light diffusibility and the brightness. One can easily determine from the transparency of the mixture obtained by addition of the polymer [B] whether or not the polymer [B] is homogeneously dissolved. For example, if the mixture is transparent or slightly hazy, a resin obtained by the polymerization ordinarily is optically uniform. However, if extreme turbidity is observed in the mixture, a resin obtained by polymerization has occasionally exhibited optical heterogeneity which can be easily confirmed by observation with the naked eye.

A radical polymerization initiator is added to the mixture obtained by dissolving the polymer [B] in the polymerizable composition for formation of the polymer [A], and ordinarily, the mixture is cast in a desired casting mold and polymerized in the mold.

Suitable polymerization initiators include: azo type initiators, such as 2,2' - azobis(isobutyronitrile), 2,2' - azobis(2,4 - dimethylvaleronitrile) and 2,2' - azobis(2,4 - dimethyl - 4 - methoxyvaleronitrile); organic peroxides such as benzoyl peroxide and lauroyl peroxide; and so-called redox type initiators comprising an oxidizing agent and a reducing agent in combination.

When a redox type initiator is used, it sometimes is unnecessary to effect heating of the polymerization, but ordinarily, after the mixture has been cast in a casting mold, the mixture is heated at 40 to 150°C to effect polymerization. It is especially preferred that the mixture be heated at 50 to 95°C at a first stage and be then heated to 100 to 140°C at a second stage to complete the polymerization.

As preferred examples of the casting mold to be used at the polymerization step, there can be mentioned a mold comprising two tempered glass plates having peripheries thereof sealed by soft gaskets and a mold comprising two confronting stainless steel endless belts having peripheries thereof sealed by soft gaskets and one surface mirror-polished, which are advanced in the same direction at the same speed.

An especially preferred process for the preparation of the light-diffusible methacrylic resin of the present invention comprises dissolving a polymer [B] forming the dispersed phase into a polymerizable composition for formation of a polymer [A] forming the continuous phase, which is partially polymerized to a polymer content of 15 to 25% by weight, adding an azo-type or organic peroxide-type initiator to the solution, continuously casting the mixture between two confronting stainless steel endless belts having peripheries sealed by soft gaskets and one surface mirror-polished, which are advanced in the same direction at the same speed, from the upstream end, heating the cast mixture to complete polymerization, and withdrawing the resulting resin plate continuously from the downstream end.

A resin plate obtained by dissolving the polymer [B] forming the dispersed phase into the polymerizable composition for formation of the polymer [A] forming the continuous phase and polymerizing the solution according to the process of the present invention has a two-phase structure. The structure comprises dispersed phase particles dispersed in the continuous phase, though the solution before the polymerization is completely transparent. The section of each particle of the dispersed phase ordinarily has a circular shape, though it sometimes has an oval shape. The diameter of the circular section (or the long or short diameter of the oval section) of the dispersed particles varies according to the compositions, molecular weights and weight ratios of the polymers [A] and [B] and also to the curing speed at the step of polymerizing the polymerizable composition for the formation of the polymer [A] forming the continuous phase. Ordinarily it is in the range of from 0.1 micron to 200 µm. Usually as the molecular weight of the polymer [B] forming the dispersed phase is higher, the weight ratio of the dispersed phase is higher or the curing speed at the step of polymerizing the polymerizable composition for formation of the polymer [A] forming the continuous phase is smaller, the diameter of particles of the dispersed phase (or the longer diameter or short diameter of oval particles, as the case may be) tends to become larger. Accordingly, if the foregoing conditions are appropriately selected according to required light-diffusing characteristics, a light-diffusible resin having a desirable light diffusibility is obtained. One having ordinary skill in the art will have no difficulty in producing the type of product that is desired.

Procedures for making shaped articles

The light diffusibility of the articles made of the light-diffusible methacrylic resin of the present invention can further be increased by forming convexities and concavities on the surface of such articles. Various methods may be adopted for the formation of convexities and concavities on the resin surface. As an example one method in which polymerization is carried out in a casting mold having convexities and concavities formed on the surfaces thereof to reproduce these convexities and concavities on the surfaces of the formed resin can be used. Alternatively a method in which a resin heated at a temperature higher than the forming temperature is pressed to an embossed mold to form convexities and concavities on the resin surface is used or a method in which a resin is heated at a temperature higher than the forming temperature and is subjected to draw forming to give a delustered surface to the resin can also be used. In order to obtain a light-diffusible resin having a beautiful delustered surface, it is preferable to adopt the last mentioned draw forming method in which a resin is heated at a temperature above the heat distortion temperature and is subjected to draw forming. Particularly when the size of individual dispersed particles of the polymer [B] forming the dispersed phase of the methacrylic resin of the present invention is 0.5 to 200 µm, as calculated as the radius of spheres having the same cross-section, by draw-forming the resin at a temperature higher than the heat distortion temperature, a very beautiful delustered surface can be produced. Therefore, a novel process for the production of a methacrylic resin formed article having an excellent delustered surface can be provided according to the present invention.

This process for preparing a light-diffusible resin article having a delustered surface formed by draw-forming the above-mentioned light-diffusible methacrylic resin of the present invention at a temperature higher than the heat distortion temperature is characterized by the following features:

(A) the resulting delustered surface is beautiful;

(B) the texture or fineness of the delustered surface can be changed by appropriately controlling the size of the dispersed particles of the dispersed phase;

(C) reduction of the light diffusibility caused by reduction of the resin thickness by draw forming can be compensated by the scattering of light on the delustered surface, and an undesirable change of the light diffusibility due to draw forming can be controlled; and

(D) steps other than those necessary for the ordinary resin forming operation are not required for formation of a delustered surface, and the process is very simple.

In the present invention, the surface of the resin is delustered at a temperature higher than the heat distortion temperature. By the heat distortion temperature we mean a deflection temperature determined according to the method of ASTM D-648-45T. At the draw-forming step, the resin of the present invention is heated at a temperature higher than the heat distortion temperature of the resin, but it is ordinarily preferred that the resin be heated at a temperature higher by at least 10°C than the heat distortion temperature of the resin.

Draw forming of the resin can be accomplished by biaxial or monoaxial stretching of a plane plate using a tenter or the like, free blow forming, ejection forming or vacuum forming.

While the draw ratio expressed by the formula $[\sqrt{(do/d)}-1]\times100$ (in which do stands for the resin thickness before draw forming and d stands for the resin thickness after draw forming) is in the range of from 0 to 50%, the degree of delustering is increased with an increase of the draw ratio, and when the draw ratio exceeds the above range, increase of the degree of delustering with increase of the draw ratio becomes relatively gradual.

The light diffusibility of the resin due to the presence of the dispersed phase in the interior of the resin is monotonously reduced with decrease of the resin thickness.

Accordingly, it is preferred that the draw ratio adopted at the draw-forming step be appropriately selected according to the desired degree of delustering and the desired degree of the light diffusibility.

Examples of the invention

The present invention will now be described in detail with reference to the following Examples that by no means limit the scope of the present invention as claimed. Unless otherwise indicated, all percentages and parts in these Examples are by weight and all temperatures are reported in degrees celcius.

The total luminous transmittance was determined according to the method of JIS K-7105.

The maximum bend angle β was determined according to the following method: A tungsten lamp (2850°K) was lighted on an optical stand, and the distance between the light source and a sample attachment stand was adjusted so that the incident illuminance was 10 ft-cd. A sample was attached to the sample attachment stand and a luminance meter was arranged to confront the sample. The luminance (B ft-L) in the direction of 0° to the optical axis was measured by the luminance meter, and luminance values in directions of up to 5° to the optical axis were measured at intervals of 1°. Then, luminance values in directions of up to 50° to the optical axis were measured at intervals of 5°. The gain G was calculated according to the following formula:

$$G=B \text{ ft-L}/10 \text{ ft-cd}.$$

The bend angle was plotted on the abscissa and the gain was plotted on the ordinate to obtain a gain curve. The angle at which the gain value was 33% of the gain value at 0° was read from the curve, and this angle was defined as the maximum bend angle.

The intrinsic viscosity of the polymer is one measured in chloroform at 25°C.

In the Examples, each $n_B/n_A$ value was calculated from the refractive indexes $n_A$ and $n_B$ of the polymers [A] and [B] measured independently.

The gloss was measured by using a gloss meter supplied by Tokyo Denshoku at an incident angle of 60° and a reflection angle of 60°.

Example 1

(1) Preparation of poly(t-butyl methacrylate)

A 500-liter autoclave provided with a jacket equipped with a stirrer and a temperature sensor was charged with a monomer mixture comprising 150 Kg (100 parts) of t-butyl methacrylate, 6 Kg (4 parts) of n-octylmercaptan and 0.3 Kg (0.2 part) of 2,2' - azobis(isobutyronitrile) and a dispersion medium comprising 300 Kg (200 parts) of deionized water, 0.75 Kg (0.5 part) of sodium sulfate and 0.03 Kg (0.02 part) of a dispersion stabilizer (methyl methacrylate/potassium sulfopropyl methacrylate copolymer). Polymerization was carried out with stirring at 180 rpm while circulating warm water maintained at 75°C in the jacket. The peak of the polymerization heat was confirmed, and when 3 hours had passed from the initiation of the polymerization, the temperature of circulated warm water was elevated and the inner temperature was maintained at 95°C for 1 hour. Water was charged into the jacket to cool the contents, and the obtained beads of poly(t-butyl methacrylate) were washed and dried. The intrinsic viscosity of the obtained polymer was 0.015 l/g.

(2) Preparation of a light-diffusible methacrylic resin plate

A transparent composition comprising 96 parts of partially polymerized methyl methacrylate (polymer content=19%), 4 parts of poly(t-butyl methacrylate) obtained in (1) above, 0.05 part of 2,2' - azobis(2,4 - dimethylvaleronitrile), 0.01 part of Tinuvin®P (ultraviolet absorber supplied by Ciba-Geigy) and 0.001 part of sodium dioctysulfosuccinate (mold releaser) was continuously cast from the upstream end of a space sealed by gaskets and two stainless steel endless belts having one surface mirror-polished, which were advanced in the same direction at the same speed, according to customary procedures. The cast composition was allowed to pass through a shower zone of warm water maintained at 82°C over a period of 28 minutes, and the composition was allowed to pass through a heating zone of a far-infrared ray heater having a maximum heating temperature of 125°C and a gradually cooling zone over a period of 14 minutes. A light-diffusible resin plate having a thickness of 3 mm, which was bright and was free of optical unevenness under the naked eye observation, was continuously withdrawn from the downstream end.

The obtained resin plate had a total luminous transmittance of 88.5% and a maximum bend angle β of 17°. Thus, it was confirmed that the resin plate had a high total light ray percent transmission and a high

light diffusibility. The individual particles of the dispersed phase were spherical and had an average radius of 3.6 microns. The $n_B/n_A$ ratio was 0.983.

Examples 2 through 6 and Comparative Examples 1 and 2

Under conditions similar to the conditions used in Example 1, a t-butyl methacrylate/cyclohexyl methacrylate copolymer was obtained (the t-butyl methacrylate/cyclohexyl methacrylate charge weight ratio was 80/20 and the intrinsic viscosity was 0.022 l/g).

The procedures described in (2) of Example 1 were repeated in the same manner except that the t-butyl methacrylate/cyclohexyl methacrylate copolymer and the partially polymerized methyl methacrylate (polymer content=19%) were added in amounts shown in Table 1; resin plates having a thickness of 3 mm were obtained.

With respect to each resin plate, the total luminous transmittance and the maximum bend angle were measured and the results obtained are shown in Table 1. In each of these Examples, the $n_B/n_A$ ratio was 0.988.

TABLE 1

| | Partially polymerized methyl methacrylate (parts) | t-Butyl methacrylate/cyclohexyl methacrylate copolymer (parts) | Total luminous transmittance (%) | Maximum bend angle β (°) |
|---|---|---|---|---|
| Comparative Example 1 | 100 | 0 | 93.2 | 0 |
| Comparative Example 2 | 99.95 | 0.05 | 92.8 | <1 |
| Example 2 | 99.5 | 0.5 | 91.1 | 2 |
| Example 3 | 98 | 2 | 90.7 | 6 |
| Example 4 | 95 | 5 | 90.2 | 11 |
| Example 5 | 92 | 8 | 88.9 | 14 |
| Example 6 | 90 | 10 | 87.3 | 18 |

Comparative Examples 3 through 7

Procedures described in (2) of Example 1 were repeated in the same manner except that poly(t - butyl methacrylate) was replaced by a styrene/methyl methacrylate copolymer (the styrene/methylmethacrylate charge weight ratio was 80/20 and the intrinsic viscosity was 0.035 l/g) and the partially polymerized methyl methacrylate (polymer content=19%) and the styrene/methyl methacrylate copolymer were added in amounts shown in Table 2, whereby resin plates having a thickness of 3 mm were obtained.

With respect to each resin plate, the total luminous transmittance and maximum bend angle β were measured to obtain results shown in Table 2.

In each of these Comparative Examples, the $n_B/n_A$ ratio was 1.053.

The gains of the resin plate of Comparative Example 5 at bend angles of from 0° to 50° are shown in Figure 1 together with the results obtained in Example 4.

The relationships between the total luminous transmittance and the maximum bend angle, observed in the resin plates obtained in Examples 2 through 6 and Comparative Examples 3 through 7, are shown in Figure 2.

TABLE 2

| Comparative Example No. | Partially polymerized methyl methacrylate (parts) | Styrene/methyl methacrylate copolymer (parts) | Total luminous transmittance (%) | Maximum bend angle (°) |
|---|---|---|---|---|
| 3 | 99.5 | 0.5 | 90.3 | <1 |
| 4 | 99.0 | 1.0 | 87.3 | <1 |
| 5 | 98.5 | 1.5 | 80.8 | <1 |
| 6 | 98.25 | 1.75 | 78.2 | 3 |
| 7 | 98.1 | 1.9 | 77.3 | 14 |

Example 7

Under conditions similar to the conditions described in (1) of Example 1 beads of a t-butyl methacrylate/ethyl methacrylate copolymer (the t-butyl methacrylate/ethyl methacrylate charge weight ratio was 60/40 and the intrinsic viscosity was 0.033 l/g) were produced.

A composition containing 95 parts of partially polymerized methyl methacrylate (polymer content=6.5%), 5 parts of the above-mentioned t-butyl methacrylate/ethyl methacrylate copolymer, 0.025 part of 2,2' - azobis(2,4 - dimethylvaleronitrile) and 0.01 part of Tinuvin P was cast between two tempered glass plates, dipped in a water bath tank maintained at 65°C for 5 hours and heated in an air bath tank maintained at 120°C for 2 hours to complete polymerization. A bright, light-diffusible plate having a thickness of 3 mm was obtained.

The so-obtained resin plate had a total luminous transmittance of 91.0% and a maximum bend angle β of 5°. Thus, it was confirmed that the resin plate had a high total luminous transmittance and a high light diffusibility.

In this Example, the $n_B/n_A$ ratio was 0.987. Individual particles of the dispersed phase had an oval sectional shape having an average long diameter of 28 μm and an average short diameter of 20 μm.

Example 8

The procedures described in (2) of Example 1 were repeated in the same manner except that the composition to be cast was changed to a composition containing 95 parts of partially polymerized methyl methacrylate (polymer content=19%), 5 parts of the t-butyl methacrylate/ethyl methacrylate used in Example 7, 0.05 part of 2,2' - azobis(2,4 - dimethylvaleronitrile) and 0.01 part of Tinuvin P, whereby a bright light-diffusible resin plate having a thickness of 3 mm was obtained.

The resin plate had a total luminous transmittance of 90.6% and a maximum bend angle β of 7°. Thus, it was confirmed that the resin plate had a high total luminous transmittance and a high light diffusibility.

Individual particles of the dispersed phase had a circular section having an average diameter of 16 μm.

Example 9

In the same manner as described in (2) of Example 1, a light blue transparent composition containing 97 parts of partially polymerized methyl methacrylate (polymer content=21%), 2 parts of 2 - ethylhexyl methacrylate, 1 part of an ethyl methacrylate/benzyl methacrylate copolymer (the ethyl methacrylate/benzyl methacrylate charge weight ratio was 60/40 and the intrinsic viscosity was 0.018 l/g), 0.02 part of 2,2' - azobis(isobutyronitrile), 0.0015 part of a blue dye (Sumiplast Green G, registered trademark supplied by Sumitomo Kagaku Kogyo) and 0.05 part of Tinuvin P was continuously cast from the upstream end of a space defined by gaskets and two endless stainless steel belts having one surface mirror-polished, which were advanced in the same direction at the same speed, according to the customary procedures. The cast composition was allowed to pass through a shower zone of warm water maintained at 76°C over a period of 56 minutes and also to pass through a heating zone of a far-infrared heater having a maximum heating temperature of 120°C and a gradually cooling zone over a period of 28 minutes. A bright light-diffusible resin plate of a light blue color having a thickness of 6 mm was continuously withdrawn from the downstream end.

Example 10

The procedures of Example 7 were repeated in the same manner except that the composition to be cast was changed to a composition comprising 95 parts of partially polymerized methyl methacrylate (polymer content=6.5%), 5 parts of a benzyl methacrylate/methyl methacrylate copolymer (the benzyl methacrylate/methyl methacrylate charge weight ratio was 60/40 and the intrinsic viscosity was 0.044 l/g), 0.2 part of lauroyl peroxide and 0.0005 part of Toshiba Silicone Oil YF-3063 (mold releaser) and the plate thickness was changed to 2 mm, whereby a bright light-diffusible resin plate was obtained.

The resin plate had a total luminous transmittance of 88.9% and a maximum bend angle β of 15°. Thus, it was confirmed that the resin plate had a high total luminous transmittance and a high light diffusibility. In this Example, the $n_B/n_A$ ratio was 1.031.

Examples 11 through 15 and Comparative Examples 8 and 9

Resin plates having a thickness of 2 mm were obtained by repeating the procedures of Example 10 in the same manner except that a polymer shown in Table 3 was used instead of the benzyl methacrylate/methyl methacrylate copolymer.

With respect to each resin plate, the total luminous transmittance and maximum bend angle were determined to obtain results shown in Table 3.

TABLE 3

| | Copolymer used | | | | | |
|---|---|---|---|---|---|---|
| | Composition | Charge weight ratio | Intrinsic viscosity (l/g) | $n_B/n_A$ | Total luminous transmittance (%) | Maximum bend angle (°) |
| Example 11 | t-butyl meth-acrylate/cyclo-hexyl methacry-late copolymer | t-butyl methacrylate/-cyclohexylmethacrylate =70/30 | 0.025 | 0.991 | 90.7 | 6 |
| Example 12 | ditto | t-butyl methacrylate/-cyclohexyl methacrylate =60/40 | 0.025 | 0.993 | 91.2 | 2 |
| Comparative Example 8 | ditto | t-butyl methacrylate/-cyclohexyl methacrylate =40/60 | 0.025 | 0.998 | 92.8 | <1 |
| Comparative Example 9 | ditto | t-butyl methacrylate/-cyclohexyl methacrylate =30/70 | 0.025 | 1.001 | 93.0 | <1 |
| Example 13 | ditto | t-butyl methacrylate/-cyclohexyl methacrylate =10/90 | 0.025 | 1.006 | 90.9 | 2 |
| Example 14 | cyclohexyl methacrylate/-styrene copolymer | cyclohexyl methacrylate/-styrene=50/50 | 0.024 | 1.037 | 90.4 | 9 |
| Example 15 | benzyl meth-acrylate/cyclo-hexyl methacry-late/styrene copolymer | benzyl methacrylate/-cyclohexyl methacry-late/styrene=50/20/30 | 0.019 | 1.047 | 86.8 | 18 |

Example 16

The procedures described in (2) of Example 1 were repeated in the same manner except that the composition to be cast was changed to a composition comprising 92.5 parts of partially polymerized methyl methacrylate (polymer content=19%), 7.5 parts of poly(cyclohexyl methacrylate) (intrinsic viscosity=0.013 l/g), 0.045 part of 2,2' - azobis(2,4 - dimethylvaleronitrile) and 0.001 part of sodium dioctylsulfosuccinate (parting agent), to obtain a bright, light-diffusible resin plate having a thickness of 3 mm and a mirror-polished surface, in which no optical unevenness was observed with the naked eye. The light-diffusible resin plate had a total luminous transmittance of 88% and a heat distortion temperature of 94.5°C. The dispersed particles had a circular section having an average radius of 7.1 microns. In this Example, the $n_B/n_A$ ratio was 1.008.

The so-obtained resin plate was heated at 150°C by a far-infrared ray heater and subjected to stretch forming. The draw ratio was changed as shown in Table 4 by adjusting the forming conditions appropriately.

Each of the so-obtained molded articles had a beautiful delustered surface. When the relations of the draw ratio to the gloss, total luminous transmittance and maximum bend angle β were determined, the results shown in Table 4 were obtained. From these results, it will readily be understood that the formed articles had a high total luminous transmittance and a relatively excellent light diffusibility.

TABLE 4

| Draw ratio* (%) | Gloss** (%) | Total luminous transmittance (%) | Maximum bend angle (°) |
|---|---|---|---|
| 0 | 100 | 88 | 7 |
| 20 | 31 | 89 | 5 |
| 40 | 23 | 90 | 5 |
| 81 | 20 | 89 | 6 |
| 118 | 19 | 89 | 5 |

Note:

$$\text{* draw ratio} = \left(\sqrt{\frac{\text{plate thickness before drawing}}{\text{plate thickness after drawing}}} - 1\right) \times 100$$

**relative value calculated based on the assumption that the gloss of the sample before drawing was 100

Example 17

According to procedures similar to those described in Example 16, a light-diffusible resin plate having a thickness of 4 mm and a mirror surface gloss, which contained a continuous phase of 98 parts of a methyl methacrylate/ethyl acrylate copolymer (the methyl methacrylate/ethyl acrylate charge weight ratio was 98/2 and the intrinsic viscosity of 0.026 l/g) and a dispersed phase of 2 parts of poly(t-butyl methacrylate) (the intrinsic viscosity was 0.015 l/g), was obtained. The resin plate had a total luminous transmittance of 87% and a heat distortion temperature of 95.1°C. The dispersed particles had a circular section having an average radius of 3.6 microns. In this Example, the $n_B/n_A$ ratio was 0.983.

The light-diffusible resin plate was heated at 150°C in a hot air circulating furnace and was free-blow-formed to a semi-spherical shape. The obtained formed article had a beautiful delustered surface.

Example 18

According to procedures similar to those described in Example 16, a light-diffusible resin plate having a thickness of 3 mm and a mirror surface gloss, which comprised a continuous phase of 97 parts of poly(methyl methacrylate) (the intrinsic viscosity was 0.032 l/g) and a dispersed phase of 3 parts of a cyclohexyl methacrylate/benzyl methacrylate copolymer (the cyclohexyl methacrylate/benzyl methacrylate charge weight ratio was 70/30 and the intrinsic viscosity was 0.017 l/g), was obtained.

The resin plate had a total luminous transmittance of 87% and a heat distortion temperature of 98.4°C. The dispersed particles had a circular section having an average radius of 4.3 microns. In this Example, the $n_B/n_A$ ratio was 1.021.

The light-diffusible resin plate was heated at 140°C by a far-infrared ray heater and subjected to stretch forming. The draw ratio was changed as shown in Table 5 by appropriately adjusting the forming conditions.

Each of the so-obtained formed articles had a beautiful delustered surface. With respect to each formed article, the relationships of the draw ratio to the gloss, total luminous transmittance and maximum bend angle β were determined to obtain results shown in Table 5. From these results it will readily be understood that each formed article had a high total luminous transmittance and a relatively excellent light diffusibility.

TABLE 5

| Draw ratio* (%) | Gloss** (%) | Total luminous transmittance (%) | Maximum bend angle (°) |
|---|---|---|---|
| 0 | 100 | 87 | 18 |
| 26 | 46 | 89 | 12 |
| 49 | 38 | 89 | 11 |
| 77 | 32 | 90 | 10 |
| 106 | 31 | 90 | 10 |

Note:

$$* \text{ draw ratio} = \left(\sqrt{\frac{\text{plate thickness before drawing}}{\text{plate thickness after drawing}}} - 1\right) \times 100$$

**relative value calculated based on the supposition that the gloss of the sample before drawing was 100

Example 19

The procedures described in Example 10 were repeated in the same manner except that the composition to be cast was changed to a composition containing 95 parts of partially polymerized methyl methacrylate (polymer content=6.5%), 5 parts of a t-butyl methacrylate/ethyl methacrylate copolymer (the t-butyl methacrylate/ethyl methacrylate charge weight ratio was 60/40 and the intrinsic viscosity was 0.033 l/g), 0.025 part of 2,2' - azobis(2,4 - dimethylvaleronitrile), 0.01 part of Tinuvin P (ultraviolet absorber supplied by Ciba-Geigy) and 0.9 part of titanium oxide (Titac R-550, registered trademark supplied by Sakai Kagaku Kogyo, particle size=0.3 to 0.5 μm). A white opaque resin plate having a thickness of 3 mm and a mirror surface gloss was obtained. The resin plate had a heat distortion temperature of 105.3°C. In this Example, the $n_B/n_A$ ratio was 0.987.

The resin plate was heated at 180°C in a hot air circulating furnace and was free-blow-formed into a semi-spherical shape. The obtained formed article had a beautiful delustered surface.

Comparative Example 10

The procedures of Example 19 were repeated in the same manner except that the t-butyl methacrylate/ethyl methacrylate copolymer was not added to the composition to be cast. A white opaque resin plate having a heat distortion temperature of 105.9°C was obtained. In the same manner as described in Example 19, the resin plate was heated at 180°C and free-blow-formed into a semi-spherical shape. The surface of the molded article retained a mirror surface gloss.

**Claims**

1. A process for producing a light diffusible methacrylic resin composition comprising 80 to 99.9% by weight of a polymer (A), forming a continuous phase, and 20 to 0.1% by weight of polymer (B) forming a dispersed phase, in which polymer (A) is a polymer prepared from methyl methacrylate alone or a polymerizable unsaturated monomer mixture containing at least 80% by weight of methyl methacrylate and polymer (B) is a polymer prepared from at least one polymerizable unsaturated monomer represented by the formula (I)

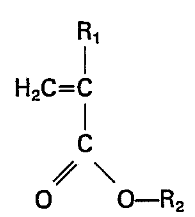

wherein $R_1$ represents a hydrogen atom or a methyl radical and $R_2$ represents a halogen-substituted or unsubstituted alkyl, cycloalkyl or aralkyl radical each having 2 to 18 carbon atoms, or a polymerizable unsaturated monomer mixture containing at least 50% by weight of at least one polymerizable unsaturated monomer represented by the above formula characterized by

(1) homogeneously dissolving the polymer (B) into methyl methacrylate, partially polymerized methyl methacrylate, the polymerizable unsaturated monomer mixture containing at least 80% by weight of methyl methacrylate or a partially polymerized product thereof for the formation of the polymer (A), and

(2) polymerizing the resulting solution in the presence of a radical polymerization initiator under conditions such that the ratio of the refractive index $n_B$ of the polymer (B) to the refractive index $n_A$ of the polymer (A) is in the range of $0.950 \leq n_B/n_A < 0.998$ or $1.002 < n_B/n_A \leq 1.050$.

2. The process for producing a light-diffusible methacrylic resin according to claim 1, in which the polymerization is carried out in a casting mold.

3. A light-diffusible methacrylic resin formed article having a delustered surface obtained by draw-forming of a light-diffusible methacrylic resin comprising 80 to 99.9% by weight of a polymer (A) forming a continuous phase and 20 to 0.1% by weight of a polymer (B) forming a dispersed phase, at a temperature higher than a heat distortion temperature of said resin, wherein polymer (A) is a polymer prepared from methyl methacrylate alone or a polymerizable unsaturated monomer mixture containing at least 80% by weight of methyl methacrylate, polymer (B) is a polymer prepared from at least one polymerizable unsaturated monomer represented by the formula (I):

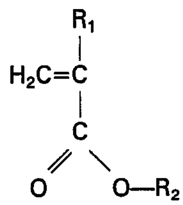

wherein $R_1$ represents a hydrogen atom or a methyl radical and $R_2$ represents a halogen-substituted or unsubstituted alkyl, cycloalkyl or aralkyl radical each having 2 to 18 carbon atoms or a polymerizable unsaturated monomer mixture containing at least 50% by weight of at least one polymerizable unsaturated monomer represented by the above formula, provided that the ratio of the refractive index $n_B$ of the polymer (B) to the refractive index $n_A$ of the polymer (A) is in the range of $0.950 \leq n_B/n_A < 0.998$ or $1.002 < n_B/n_A \leq 1.050$.

4. The light-diffusible methacrylic resin formed article as claimed in claim 3, in which the size of the individual dispersed particles is 0.1 to 500 µm as calculated as the radius of equivalent spheres having the same refractive index and equal light scattering cross-section.

5. The light-diffusible methacrylic resin formed article as claimed in claim 3, in which the amount of the continuous phase is 90 to 99.5% by weight and the amount of dispersed phase is 10 to 0.5% by weight.

**Patentansprüche**

1. Verfahren zur Herstellung einer lichtstreuenden Methacrylharzmasse umfassend 80 bis 99,9 Gew.-% eines di kontinuierliche Phase bildenden Polymeren (A) und 20 bis 0,1 Gew.-% eines die disperse Phase bildenen Polymeren (B), wobei Polymer (A) ein Polymer ist, das aus Methylmethacrylat allein oder einer polymerisierbaren ungesättigten Monomermischung, die mindestens 80 Gew.-% Methylmethacrylat enthält, hergestellt wird und Polymer (B) ein Polymer ist, das mindestens aus einem polymerisierbaren ungesättigten Monomeren der Formel (I)

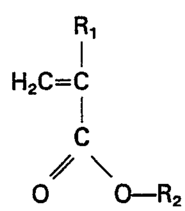

worin $R_1$ ein Wasserstoffatom oder eine Methylgruppe und $R_2$ eine halogensubstituierte oder unsubstituierte Alkyl-, Cycloalkyl- oder Aralkylgruppe mit jeweils 2 bis 18 Kohlenstoffatomen bedeuten, oder aus einer polymerisierbaren ungesättigten Monomermischung, die mindestens 50 Gew.-% mindestens eines polymerisierbaren ungesättigten Monomeren der obigen Formel enthält, hergestellt wird, dadurch gekennzeichnet, daß man

(1) das Polymer (B) für die Bildung des Polymeren (A) in Methylmethacrylat, teilweise polymerisiertem Methylmethacrylat, wobei die polymerisierbare ungesättigte Monomermischung mindestens 80 Gew.-% Methylmethacrylat enthält, oder einem teilweise polymerisierten Produkt daraus, homogen löst und

(2) die erhaltene Lösung in Gegenwart eines Radikalpolymerisationsinitiators unter solchen Bedingungen, daß das Verhältnis des Brechungsindex $n_B$ des Polymeren (B) zum Brechungsindex $n_A$ des Polymeren (A) im Bereich von $0{,}950 \leq n_B/n_A < 0{,}998$ oder $1{,}002 \leq n_B/n_A < 1{,}050$ liegt, polymerisiert.

2. Verfahren zur Herstellung eines lichtstreuenden Methacrylsäureharzes nach Anspruch 1, dadurch gekennzeichnet, daß man die Polymerisation in einer Gußform ausführt.

3. Aus einem lichtstreuenden Methacrylsäureharz gebildeter Gegenstand mit mattierter Oberfläche, erhalten durch Ziehverformen eines lichtstreuenden Methacrylsäureharzes, umfassend 80 bis 99,9 Gew.-% eines die kontinuierliche Phase bildenden Polymeren (A) und 20 bis 0,1 Gew.-% eines die disperse Phase bildenen Polymeren (B) bei einer Temperatur, die höher ist als die Wärmeverformungstemperatur des Harzes ist, wobei Polymer (A) ein Polymer ist, das aus Methylmethacrylat allein oder einer polymerisierbaren ungesättigten Monomermischung, die mindestens 80 Gew.-% Methylmethacrylat enthält, hergestellt wird und Polymer (B) ein Polymer ist, das mindestens aus einem polymerisierbaren ungesättigten Monomeren der Formel (I)

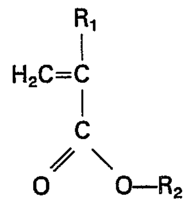

worin $R_1$ ein Wasserstoffatom oder eine Methylgruppe und $R_2$ eine halogen substituierte oder unsubstituierte Alkyl-, Cycloalkyl- oder Aralkylgruppe mit jeweils 2 bis 18 Kohlenstoffatomen bedeuten oder aus einer polymerisierbaren ungesättigten Monomermischung, die mindestens 50 Gew.-% mindestens eines polymerisierbaren ungesättigten Monomeren der obigen Formel enthält, hergestellt wird, unter der Voraussetzung, daß das Verhältnis des Brechungsindex $n_B$ des Polymeren (B) zum Brechungsindex $n_A$ des Polymeren (A) im Bereich von $0{,}950 \leq n_B/n_A < 0{,}998$ oder $1{,}002 \leq n_B/n_A \leq 1{,}050$ liegt.

4. Aus einem lichtstreuenden Methacrylsäureharz gebildeter Gegenstand nach Anspruch 3, dadurch gekennzeichnet, daß die Größe der einzelnen dispergierten Teilchen 0,1 bis 500 µm, berechnet als den Radius äquivalenter Kugeln mit gleichem Brechungsindex und gleichem Lichtstreuquerschnitt beträgt.

5. Aus einem lichtstreuenden Methacrylsäureharz gebildeter Gegenstand nach Anspruch 3, dadurch gekennzeichnet, daß die Menge der kontinuierlichen Phase 90 bis 99 Gew.-% und die Menge der dispersen Phase 10 bis 0,5 Gew.-% betragen.

**Revendications**

1. Procédé de préparation d'une composition de résine méthacrylique apte à diffuser la lumière comprenant de 80 à 99,9% en poids d'un polymère (A), formant une phase continue, et de 20 à 0,1% en poids de polymère (B) formant une phase dispersée, où le polymère (A) est un polymère préparé à partir de méthacrylate de méthyle seul ou d'un mélange de monomères non saturés polymérisables contenant au moins 80% en poids de méthacrylate de méthyle et le polymère (B) est un polymère préparé à partir d'au moins un monomère non saturé polymérisable représenté par la formule (I)

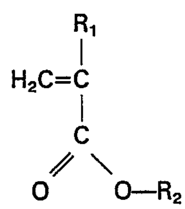

où $R_1$ représente un atome d'hydrogène ou un radical méthyle et $R_2$ représente un radical alcoyle, cycloalcoyle ou aralcoyle substitué par halogène ou non substitué, ayant chacun de 2 à 18 atomes de carbone, ou d'un mélange de monomères non saturés polymérisables contenant au moins 50% en poids d'au moins un monomère non saturé polymérisable représenté par la formule ci-dessus, caractérisé en ce que

(1) on dissout de manière homogène le polymère (B) dans le méthacrylate de méthyle, le méthacrylate de méthyle partiellement polymérisé, le mélange de monomères non saturés polymérisables contenant au moins 80% en poids de méthacrylate de méthyle ou d'un de ses produits partiellement polymérisés pour la formation du polymère (A), et

(2) on polymérise la solution résultante en présence d'un inducateur de polymérisation radicalaire dans des conditions telles que le rapport de l'indice de réfraction $n_B$ du polymère (B) à l'indice de réfraction $n_A$ du polymère (A) est dans un intervalle de $0{,}950 \leq n_B/n_A < 0{,}998$ ou $1{,}002 < n_B/n_A \leq 1{,}050$.

2. Procédé de préparation d'une résine méthacrylique apte à diffuser la lumière selon la revendication 1, dans lequel la polymérisation est conduite en utilisant un moule de fonderie.

3. Article formé d'une résine méthacrylique apte à diffuser la lumière ayant une surface dépolie obtenue en moulant par étirement une résine méthacrylique comprenant de 80 à 99,9% en poids d'un polymère (A) formant une phase continue et de 20 à 0,1% en poids d'un polymère (B) formant une phase dispersée, à une température supérieure à la température de distorsion à la chaleur de ladite résine, où le polymère (A) est un polymère préparé à partir de méthacrylate de méthyle seul ou d'un mélange de monomères non saturés polymérisables contenant au moins 80% en poids de méthacrylate de méthyle, le polymère (B) est un polymère préparé à partir d'au moins un monomère non saturé polymérisable représenté par la formule (I):

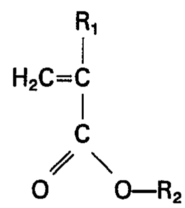

où $R_1$ représente un atome d'hydrogène ou un radical méthyle et $R_2$ représente un radical alcoyle, cycloalcoyle ou aralcoyle substitué par halogène ou non substitué ayant chacun de 2 à 18 atomes de carbone ou d'un mélange de monomères non saturés polymérisables contenant au moins 50% en poids d'au moins un monomère non saturé polymérisable représenté par la formule ci-dessus, à condition que le rapport de l'incide de réfraction $n_B$ du polymère (B) à l'indice de réfraction $n_A$ du polymère (A) soit dans un intervalle de $0{,}950 \leq n_B/n_A < 0{,}998$ ou $1{,}002 < n_B/n_A \leq 1{,}050$.

4. Article formé de résine méthacrylique apte à diffuser la lumière selon la revendication 3, dans lequel la taille des diverses particules dispersées est de 0,1 à 500 µm calculée sous la forme du rayon de sphères équivalentes ayant le même indice de réfraction et une égale section de diffusion de la lumière.

5. Article formé de résine méthacrylique apte à diffuser la lumière selon la revendication 3, dans lequel la quantité de phase continue est de 90 à 99,5% en poids et la quantité de phase dispersée est de 10 à 0,5% en poids.

Fig. 1

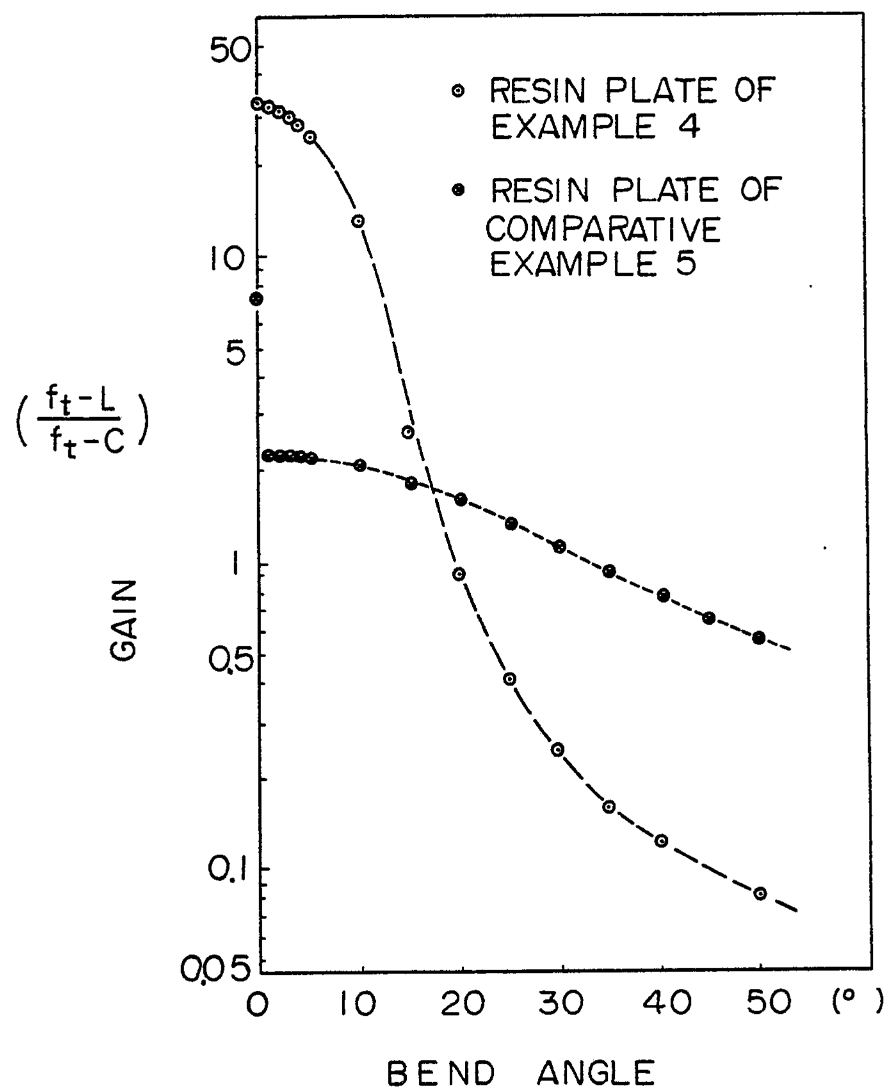

RESIN PLATE OF EXAMPLE 4
RESIN PLATE OF COMPARATIVE EXAMPLE 5
GAIN
($\frac{f_t - L}{f_t - C}$)
50
10
5
1
0.5
0.1
0.05
0
10
20
30
40
50
(°)
BEND ANGLE

*Fig. 2*

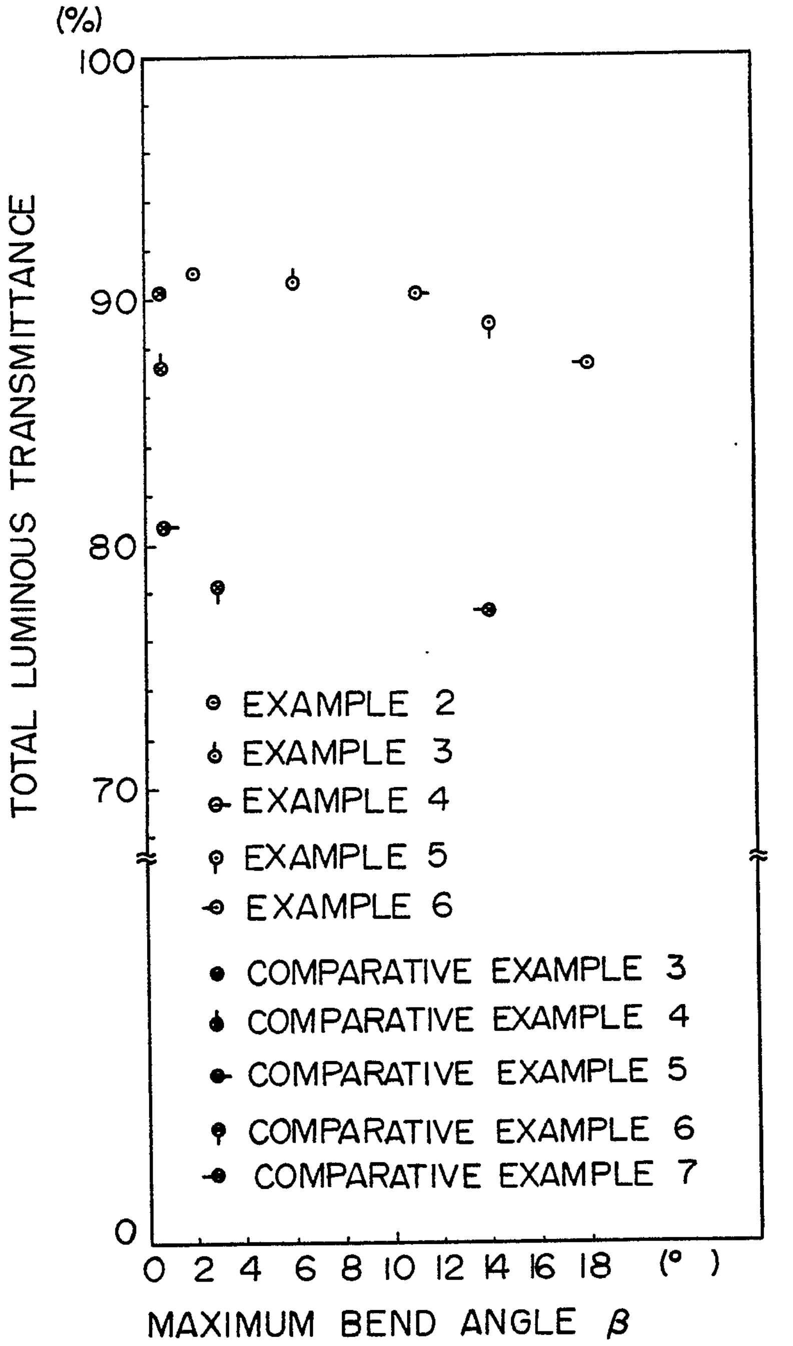
(%)
100
90
80
70
0
TOTAL LUMINOUS TRANSMITTANCE
EXAMPLE 2
EXAMPLE 3
EXAMPLE 4
EXAMPLE 5
EXAMPLE 6
COMPARATIVE EXAMPLE 3
COMPARATIVE EXAMPLE 4
COMPARATIVE EXAMPLE 5
COMPARATIVE EXAMPLE 6
COMPARATIVE EXAMPLE 7
0 2 4 6 8 10 12 14 16 18 (° )
MAXIMUM BEND ANGLE β